# EUROPEAN PATENT SPECIFICATION

(11) **EP 4 184 707 B1**
(45) Date of publication and mention of the grant of the patent: **24.12.2025**
(21) Application number: 21889400.4
(22) Date of filing: 07.10.2021
(51) Int. Cl.: H01M 50/572, H01M 50/502, H01M 50/20, H01M 50/35, H01M 50/289, H01M 50/211, H01M 50/296, H01M 50/367, H01M 50/383, H01M 50/507

(54) **BATTERY MODULE AND BATTERY PACK INCLUDING THE SAME**
BATTERIEMODUL UND BATTERIEPACK DAMIT
MODULE DE BATTERIE ET BLOC-BATTERIE LE INCLUANT

(30) Priority: 04.11.2020 KR 20200145982
(43) Date of publication of application: 24.05.2023
(73) Proprietor: LG Energy Solution, Ltd., Seoul 07335 (KR)
(72) Inventor: KIM, Kwangmo, Daejeon 34122 (KR); SEONG, Junyeob, Daejeon 34122 (KR); JUNG, Hyemi, Daejeon 34122 (KR); BYOUN, Dayoung, Daejeon 34122 (KR)
(74) Representative: Goddar, Heinz J.
(86) International application number: PCT/KR2021/013770
(87) International publication number: WO 2022/097935

(56) References cited:
- EP-A2- 4 037 082
- CN-U- 209 641 724
- JP-A- 2016 054 127
- KR-A- 20160 129 820
- KR-A- 20200 008 624
- KR-A- 20200 061 909
- KR-B1- 102 091 770

## Description

### [TECHNICAL FIELD]

### Cross Citation with Related Application(s)

This application claims the benefit of Korean Patent Application No. 10-2020-0145982 filed on November 4, 2020 with the Korean Intellectual Property Office.

The present disclosure relates to a battery module and a battery pack including the same, and more particularly to a battery module having an enhanced safety, and a battery pack including the same.

### [BACKGROUND]

A secondary battery has attracted much attention as an energy source in various products such as a mobile device and an electric vehicle. The secondary battery is a potent energy resource that can replace the use of existing products using fossil fuels, and is in the spotlight as an environment-friendly energy source because it does not generate by-products due to energy use.

Recently, along with a continuous rise of the necessity for a large-capacity secondary battery structure, including the utilization of the secondary battery as an energy storage source, there is a growing demand for a battery pack of a multi-module structure which is an assembly of battery modules in which a plurality of secondary batteries are connected in series or in parallel.

Meanwhile, when a plurality of battery cells are connected in series or in parallel to configure a battery pack, a method of configuring a battery module composed of a plurality of battery cells and then adding other components to at least one battery module to configure a battery pack is common. Since the battery cells constituting these middle or large-sized battery modules are composed of chargeable/dischargeable secondary batteries, such a high-output and large-capacity secondary battery generates a large amount of heat in a charging and discharging process.

The battery module may include a battery cell stack in which a plurality of battery cells are stacked, a module frame for housing the battery cell stack, and end plates for covering the front and rear surfaces of the battery cell stack.

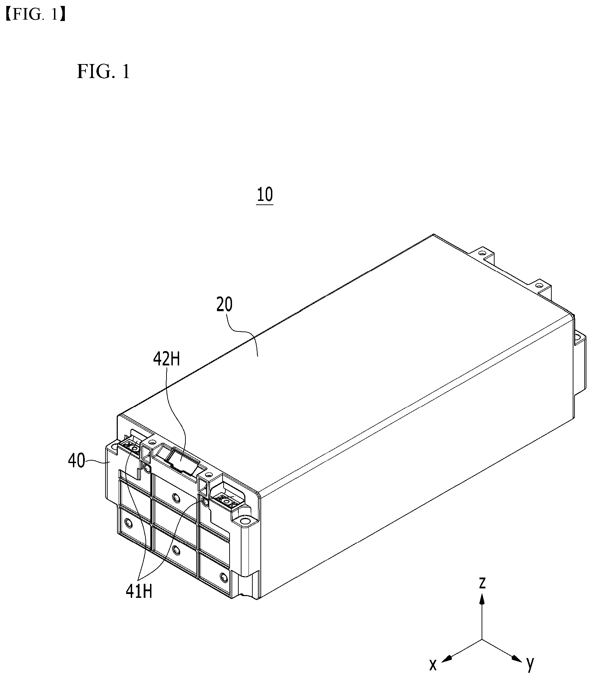

Fig. 1 is a perspective view showing a conventional battery module.

Referring to Fig. 1, the conventional battery module 10 can be manufactured by housing a battery cell stack (not shown) in the module frame 20 and then joining the end plate 40 to the opened portion of the module frame 20. At this time, a terminal busbar opening 41H where a part of the terminal busbar is exposed and a module connector opening 42H where a part of the module connector is exposed can be formed in the end plate 40. The terminal busbar opening 41H is for guiding the high voltage (HV) connection of the battery module 10, and the terminal busbar exposed through the terminal busbar opening 41H can be connected to another battery module or a BDU (battery disconnect unit). The module connector opening 42H is for guiding the LV (Low voltage) connection of the battery module 10, and the module connector exposed through the module connector opening 42H is connected to a BMS (battery management system) and can transmit voltage information, temperature information, or the like of the battery cell.

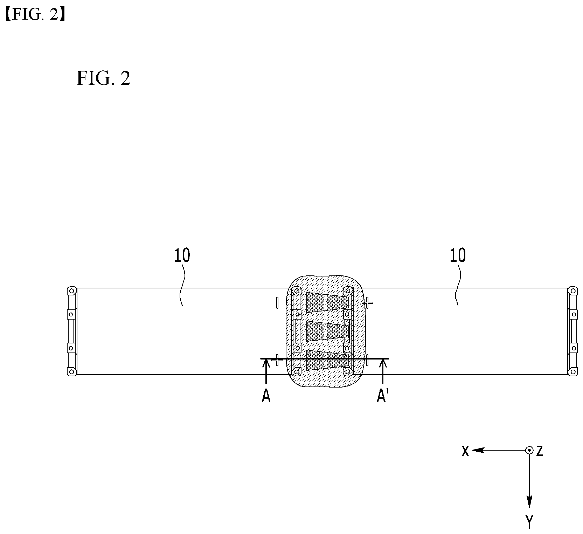

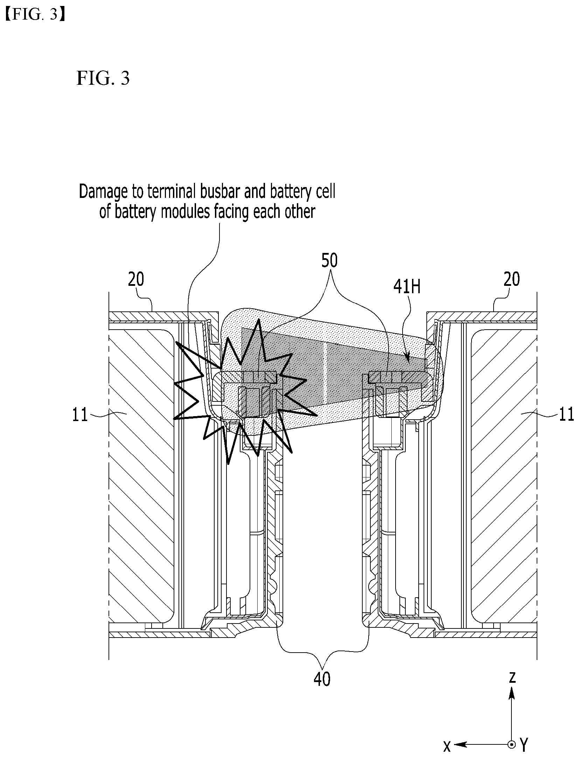

Fig. 2 is a view showing a state at the time of ignition of the battery module in the conventional battery pack in which the battery module of Fig. 1 is mounted. Fig. 3 is a cross-sectional view taken along the line A-A' of Fig. 2, which is a cross-sectional view showing the appearance of a flame that affects adjacent battery modules during ignition of a conventional battery module.

Referring to Figs. 1 to 3, the conventional battery module 10 includes a battery cell stack in which a plurality of battery cells 11 are stacked, a module frame 20 that houses the battery cell stack, and end plates 40 that are formed on the front and rear surfaces of the battery cell stack.

When physical, thermal or electrical damage including overcharging occurs to the battery cell, the internal pressure of the battery cell 11 increases and exceeds a limit value of the fusion strength of the battery cell 11. In this case, the high-temperature heat, gas, and flame generated in the battery cell 11 can be discharged to the outside of the battery cell 11.

At this time, the high-temperature heat, gas and flame may be discharged through the openings 41H and 42H formed in the end plate 40. However, in the battery pack structure in which a plurality of battery modules 10 are arranged so that the end plates 40 face each other, the high-temperature heat, gas and flame ejected from the battery module 10 may affect the adjacent battery module 10. Thereby, the terminal busbar or the like formed on the end plate 40 of the adjacent battery module may be damaged, and high-temperature heat, gas and flame may enter the interior of the battery module 10 via the openings formed in the adjacent end plates 40 of the battery module 10 to damage other electrical components including the plurality of battery cells 11. In addition, this leads to heat propagation of the adjacent battery modules 10, which cause a chain ignition in the battery pack.

### [DETAILED DESCRIPTION OF THE INVENTION]

### [Technical Problem]

It is an object of the present disclosure to provide a battery module capable of dispersing high-temperature heat and flame discharged when an ignition phenomenon occurs in the battery module, and a battery pack including the same.

However, the problem to be solved by embodiments of the present disclosure is not limited to the above-described problems, and can be variously expanded within the scope of the technical idea included in the present disclosure.

### [Technical Solution]

According to one aspect of the present disclosure, there is provided a battery module comprising: a battery cell stack in which a plurality of battery cells including electrode leads protruded in mutually opposite directions are stacked; a module frame that houses the battery cell stack; and a first busbar frame arranged on one surface of the battery cell stack in one direction in which the electrode leads protrude, wherein the first busbar frame comprises a first venting-preventing part protruded toward between the electrode leads of adjacent battery cells.

The first venting-preventing part may fill a space between the electrode leads of adjacent battery cells.

The first busbar frame may include a cushioning member attached to a surface of the first venting-preventing part facing the battery cell.

At least one of a busbar, a terminal busbar, and a module connector may be mounted onto the first busbar frame.

The battery module may further include a first end plate that is joined to the module frame while covering the first busbar frame, and the first end plate may be formed with an opening where at least one of the terminal busbar and the module connector is exposed.

The battery module may further include a second busbar frame arranged on the other surface of the battery cell stack in the other direction in which the electrode leads protrude.

At least one of a busbar, a terminal busbar, and a module connector may be mounted onto the second busbar frame.

The battery module may further include a second end plate that is joined to the module frame while covering the second busbar frame, and the second end plate may be formed with an opening where at least one of the terminal busbar and the module connector is exposed.

The battery module may further include a second end plate that is joined to the module frame while covering the second busbar frame, and a venting hole for gas discharge may be formed in the second end plate.

The second busbar frame may include a second venting-preventing part that is protruded toward between the electrode leads of adjacent battery cells among the battery cells.

At least one of a busbar, a terminal busbar, and a module connector may be mounted onto the second busbar frame.

The battery module may further include a second end plate that is joined to the module frame while covering the second busbar frame, and the second end plate may be formed with an opening where at least one of the terminal busbar and the module connector is exposed.

A gas discharge port may be formed on the upper surface of the module frame.

### [Advantageous Effects]

According to embodiments of the present disclosure, a gas discharge-suppressing structure is provided on one surface of the battery cell stack within the battery module, and thus high-temperature heat, gas, flame, etc. discharged when an ignition phenomenon occurs in the battery module can be discharged in a desired direction. By dispersing high-temperature heat, gas, and flame in this way, damage to the battery module facing the battery module can be minimized.

The effects of the present disclosure are not limited to the effects mentioned above and additional other effects not described above will be clearly understood from the description of the appended claims by those skilled in the art.

### [BRIEF DESCRIPTION OF THE DRAWINGS]

Fig. 1 is a perspective view showing a conventional battery module;
Fig. 2 is a view showing a state at the time of ignition of the battery module in the conventional battery pack in which the battery module of Fig. 1 is mounted;
Fig. 3 is a cross-sectional view taken along the line A-A' of Fig. 2;
Fig. 4 is a perspective view showing a battery module according to an embodiment of the present disclosure;
Fig. 5 is an exploded perspective view of the battery module of Fig. 4;
Fig. 6 is a perspective view of a battery cell included in the battery module of Fig. 5;
Fig. 7 is a partial perspective view showing a first busbar frame and battery cells according to an embodiment of the present disclosure;
Fig. 8 is a perspective view illustrating a surface facing the battery cells at different angles with respect to the first busbar frame of Fig. 7;
Fig. 9 is a partial plan view of the first busbar frame and battery cells of Fig. 7 as viewed from the xy plane in the -Z axis direction;
Fig. 10 is a partial plan view showing a state in which the first busbar frame and battery cells of Fig. 9 are combined;
Fig. 11 is a perspective view showing the second end plate of the battery module of Fig. 4 at different angles so as to be seen from the front;
Fig. 12 is a perspective view showing a battery module according to a modified embodiment of the present disclosure;
Fig. 13 is a perspective view showing a battery module according to a modified embodiment of the present disclosure;
Fig. 14 is a perspective view showing a first busbar frame, a second busbar frame, and a battery cell stack included in the battery module of Fig. 13; and
Fig. 15 is a partial plan view showing a first busbar frame to which a cushioning member is attached according to a modified embodiment of the present disclosure.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein.

A description of parts not related to the description will be omitted herein for clarity, and like reference numerals designate like elements throughout the description.

Further, in the drawings, the size and thickness of each element are arbitrarily illustrated for convenience of description, and the present disclosure is not necessarily limited to those illustrated in the drawings. In the drawings, the thickness of layers, regions, etc. are exaggerated for clarity. In the drawings, for convenience of description, the thicknesses of some layers and regions are exaggerated.

In addition, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, the word "on" or "above" means disposed on or below a reference portion, and does not necessarily mean being disposed on the upper end of the reference portion toward the opposite direction of gravity.

Further, throughout the description, when a portion is referred to as "including" a certain component, it means that the portion can further include other components, without excluding the other components, unless otherwise stated.

Further, throughout the description, when referred to as "planar", it means when a target portion is viewed from the upper side, and when referred to as "cross-sectional", it means when a target portion is viewed from the side of a cross section cut vertically.

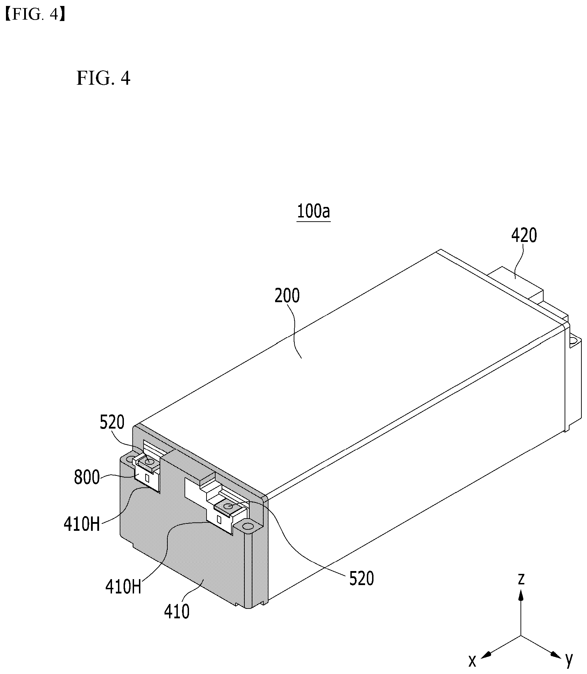

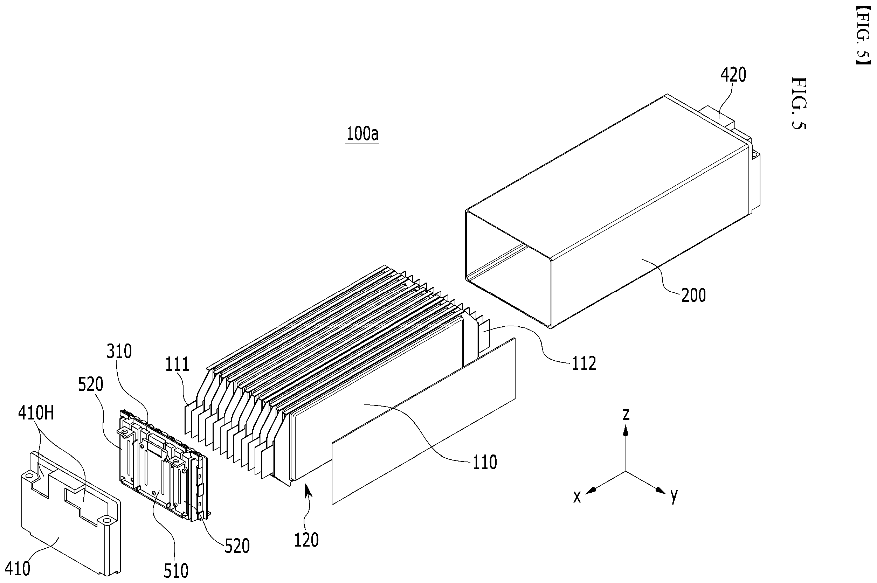

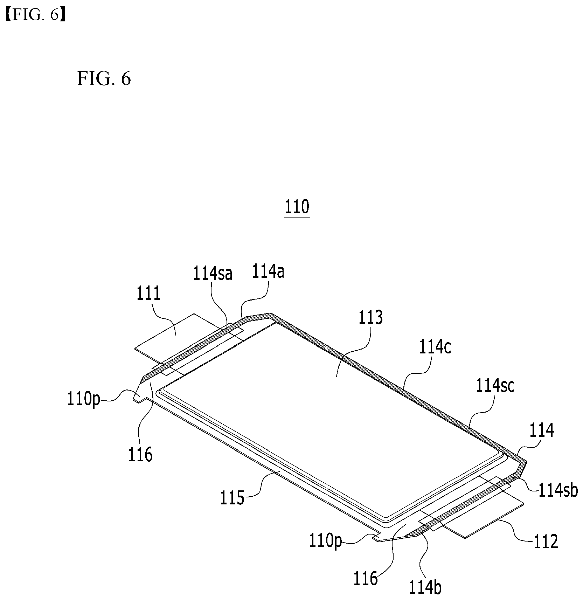

Fig. 4 is a perspective view showing a battery module according to an embodiment of the present disclosure. Fig. 5 is an exploded perspective view of the battery module of Fig. 4. Fig. 6 is a perspective view of a battery cell included in the battery module of Fig. 5.

Referring to Figs. 4 to 6, a battery module 100a according to one embodiment of the present disclosure includes a battery cell stack 120 in which a plurality of battery cells 110 including electrode leads 111 and 112 protruded in mutually opposite directions are stacked; a module frame 200 that houses the battery cell stack 120; and a first busbar frame 310 arranged on one surface of the battery cell stack 120 in one direction in which the electrode leads 111 protrude.

First, referring to Fig. 6, the battery cell 110 is preferably a pouch-type battery cell. For example, the battery cell 110 according to the present embodiment has a structure in which two electrode leads 111 and 112 face each other and protrude from one end 114a and the other end 114b of the cell main body 113, respectively. More specifically, the electrode leads 111 and 112 are connected to an electrode assembly (not shown), and protrude from the electrode assembly (not shown) to the outside of the battery cell 110.

On the other hand, the battery cell 110 can be manufactured by joining both end parts 114a and 114b of the cell case 114 and one side part 114c connecting them, in a state in which the electrode assembly (not shown) is housed in a cell case 114. In other words, the battery cell 110 according to the present embodiment has a total of three sealing parts 114sa, 114sb and 114sc, the sealing parts 114sa, 114sb and 114sc have a structure sealed by a method such as heat fusion, and the remaining other side part may be formed of a connection part 115. The cell case 114 may be formed of a laminated sheet containing a resin layer and a metal layer.

In addition, the connection part 115 may extend long along one edge of the battery cell 110, and a protrusion part 110p of the battery cell 110 called a bat-ear may be formed at an end part of the connection part 115. Further, while the cell case 114 is sealed with the protruding electrode leads 111 and 112 being interposed therebetween, a terrace part 116 may be formed between the electrode leads 111 and 112 and the cell main body 113. That is, the battery cell 110 includes a terrace part 116 formed to extend from the cell case 114 in a protruding direction of the electrode leads 111 and 112.

The battery cell 110 may be composed by a plurality of numbers, and the plurality of battery cells 110 may be stacked so as to be electrically connected to each other, thereby forming a battery cell stack 120. Referring to Fig. 5, the battery cells 110 can be stacked along the y-axis direction to form a battery cell stack 120. A first busbar frame 310 may be located on one surface of the battery cell stack 120 in the protruding direction (x-axis direction) of the electrode leads 111. Although not specifically shown in the figure, a second busbar frame may be located on the other surface of the battery cell stack 120 in the protruding direction (-x-axis direction) of the electrode leads 112 . The battery cell stack 120 and the first busbar frame 310 may be housed together within the module frame 200. The module frame 200 can protect the battery cell stack 120 housed inside the module frame 200 and the electrical components connected thereto from external physical impacts.

A thermal conductive resin may be injected between the battery cell stack 120 and the lower surface of the module frame 200, and a thermal conductive resin layer (not shown) may be formed between the battery cell stack 120 and the lower surface of the module frame 200 through the injected thermal conductive resin.

On the other hand, the module frame 200 can be opened in the protruding direction of the electrode leads 111 and 112 (x-axis direction, -x-axis direction), and a first end plate 410 and a second end plate 420 may be located on opened both sides of the module frame 200, respectively. The first end plate 410 can be joined to the module frame 200 while covering the first busbar frame 310, and the second end plate 420 can be joined to the module frame 200 while covering the second busbar frame (not shown). That is, a first busbar frame 310 may be located between the first end plate 410 and the battery cell stack 120, and a second busbar frame (not shown) may be located between the second end plate 420 and the battery cell stack 120. Further, an insulating cover 800 (see Fig. 4) for electrical insulation may be located between the first end plate 410 and the first busbar frame 310.

The first end plate 410 and the second end plate 420 are located so as to cover the one surface and the other surface of the battery cell stack 120, respectively. The first end plate 410 and the second end plate 420 can protect the first busbar frame 310 and various electrical components connected thereto from external impacts. For this purpose, they must have a predetermined strength and may include a metal such as aluminum. Further, the first end plate 410 and the second end plate 420 may be joined to a corresponding edge of the module frame 200 by a method such as welding, respectively.

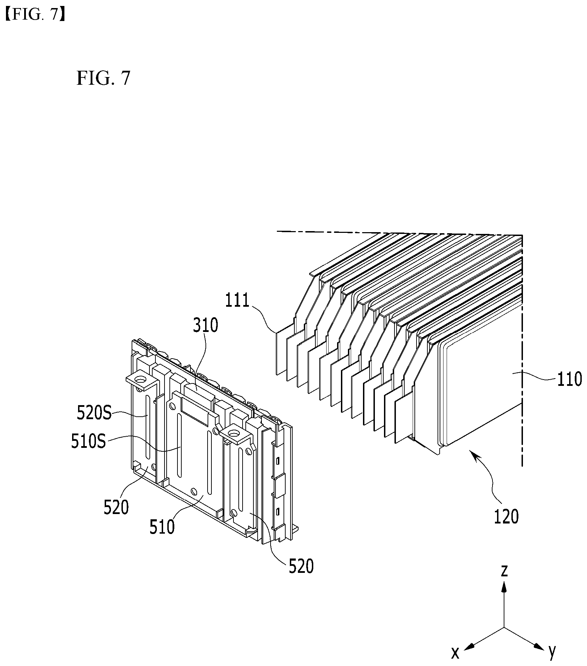

Next, the structures of the first busbar frame and the first venting-preventing part according to an embodiment of the present disclosure will be described in detail with reference to Figs. 7 to 10.

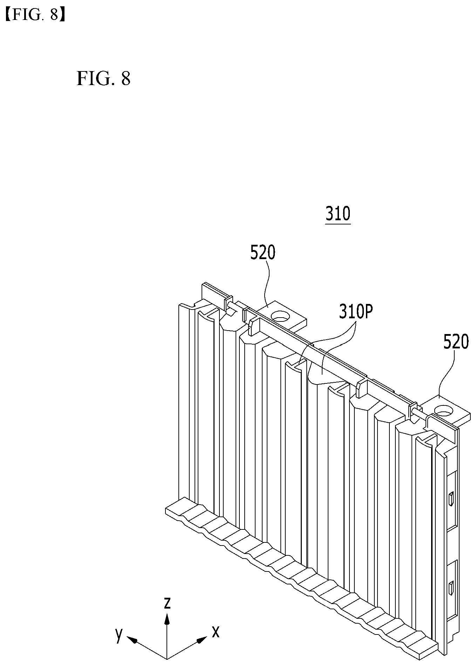

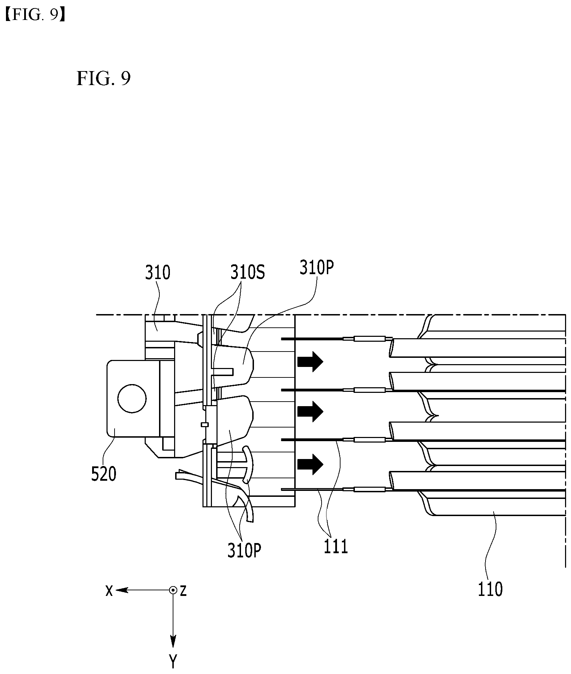

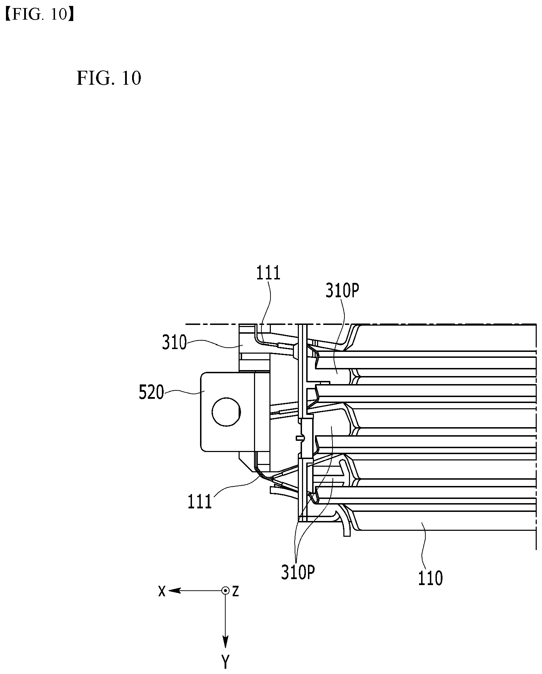

Fig. 7 is a partial perspective view showing a first busbar frame and battery cells according to an embodiment of the present disclosure. Fig. 8 is a perspective view illustrating a surface facing the battery cells at different angles with respect to the first busbar frame of Fig. 7. Fig. 9 is a partial plan view of the first busbar frame and battery cells of Fig. 7 as viewed from the xy plane in the -Z axis direction. Fig. 10 is a partial plan view showing a state in which the first busbar frame and battery cells of Fig. 9 are combined.

Referring to Figs. 7 and 8, the first busbar frame 310 according to the present embodiment includes a first venting-preventing part 310P that is protruded toward between the electrode leads 111 of adjacent battery cells 110 among the battery cells 110.

The first busbar frame 310 can be located on one surface of the battery cell stack 120 to cover the battery cell stack 120 and at the same time, guide the connection between the battery cell stack 120 and external devices. Specifically, at least one of a busbar, a terminal busbar, and a module connector may be mounted onto the first busbar frame 310. Particularly, at least one of a busbar, a terminal busbar, and a module connector may be mounted onto a surface opposite to the surface of the first busbar frame 310 facing the battery cell stack. As an example, Fig. 7 shows a state in which the busbar 510 and the terminal busbar 520 are mounted onto the first busbar frame 310.

As shown in Figs. 9 and 10, the electrode lead 111 of the battery cells 110 is bent after passing through a slit 310S formed in the first busbar frame 310 and can be joined to the busbar 510 or the terminal busbar 520. Further, the electrode lead 111 is bent after passing through a slit 510S formed in the busbar 510 or a slit 520S (see Fig. 7) formed in the terminal busbar 510 and can joined to the busbar 510 or the terminal busbar 520.

The battery cells 110 constituting the battery cell stack 120 may be connected in series or in parallel by the busbar 510 or the terminal busbar 520, and the battery cells 110 can be electrically connected to an external device or circuit through the terminal busbar 520 exposed to the outside of the battery module 100a.

The first busbar frame 310 may include an electrically insulating material. The first busbar frame 310 restricts the busbar 510 or the terminal busbar 520 from making contact with the battery cells 110, except for the portion where the busbar 510 or the terminal busbar 520 is joined to the electrode leads 111, thereby preventing the occurrence of a short circuit.

On the other hand, as described above, the second busbar frame may be located on the other surface of the battery cell stack 120, and at least one of the busbar, terminal busbar, and module connector may be mounted onto the second busbar frame. An electrode lead 112 can be joined to such a busbar.

At this time, as shown in Figs. 8 to 10, a first venting-preventing part 310P protruding from the first busbar frame 310 is formed, and the first venting-preventing part 310P is protruded toward between the electrode leads 111 of adjacent battery cells 110 among the battery cells 110. The first venting-preventing part 310P can be provided by a plurality of numbers so as to protrude toward between the respective battery cells 110. As shown in Fig. 10, the first venting-preventing part 310P may fill a space between the electrode leads 111 of adjacent battery cells 110. In other words, the first venting-preventing part 310P may be positioned adjacent to a terrace part 116 (see Fig. 6) of the battery cell 110.

Each of the battery cells 110 may generate a gas inside by a decomposition reaction of a material and a plurality of side reactions. At this time, in the case of the battery cell 110 which is a pouch-type secondary battery, a swelling phenomenon may occur in which the cell case 114 (see Fig. 6) of the laminated sheet is stretched and swells in a convex shape due to the gas generated inside.

However, when the battery cell 110 constitutes the battery cell stack 120, the cell body 113 of the battery cell 110 is difficult to cause swelling because the battery cells 110 are compressed with each other. Instead, gas is concentrated in a region corresponding to the terrace part 116 in the direction in which the electrode leads 111 and 112 protrude, and excessive swelling phenomenon may occur in the terrace part 116. The initial sealing of the terrace part 116 may be released, and the high-temperature heat, gas, and flame generated from the plurality of battery cells 110 are usually discharged in the direction in which the electrode leads 111 and 112 protrude (x-axis direction, -x-axis direction, see Figs. 5 and 7).

Therefore, the first busbar frame 310 according to the present embodiment is provided with a first venting-preventing part 310P and thus, can prevent the gas generated inside the battery cell 110 and the internal pressure caused by the gas from accumulating near the terrace part 116 , and may serve to guide the venting gas and the flame to be discharged in a desired direction. That is, the first venting-preventing part 310P can restrict the high-temperature heat, gas, and flame generated from the battery cells 110 from being discharged in the direction in which the first busbar frame 310 and the first end plate 410 are located.

Referring back to Figs, 4 and 5, an opening in which at least one of the terminal busbar and the module connector is exposed can be formed in the first end plate 410 according to the present embodiment. The opening may be a terminal busbar opening or a module connector opening. In one example, as shown in Figs. 4 and 5, a terminal busbar opening 410H where the terminal busbar 520 is exposed can be formed in the first end plate 410. The terminal busbar 520 further includes an upwardly protruding portion as compared with the busbar 510. Such upwardly protruding portion may be exposed to the outside of the battery module 100a via the terminal busbar opening 410H. The terminal busbar 520 exposed via the terminal busbar opening 410H may be connected to another battery module or a battery disconnect unit (BDU) to form a high voltage (HV) connection. However, Figs. 4 and 5 are exemplary structures, and a module connector may be mounted onto the first busbar frame 310 according to another embodiment of the present disclosure, whereby the module connector opening may be formed in the first end plate 410.

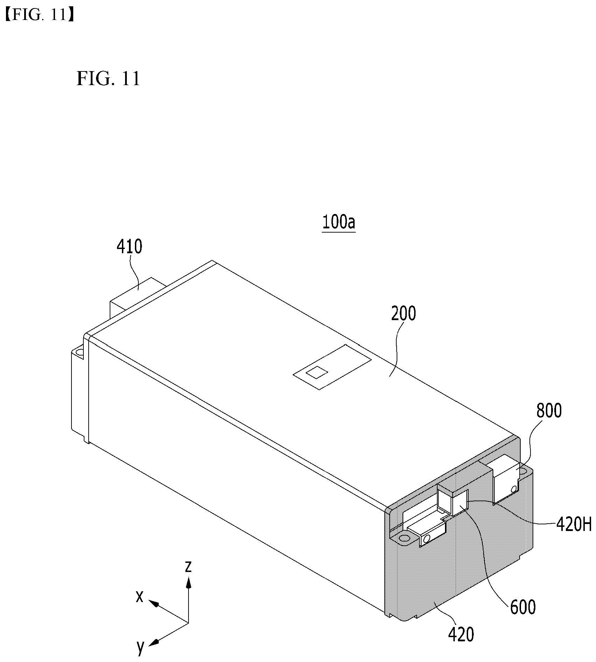

Fig. 11 is a perspective view showing the second end plate of the battery module of Fig. 4 at different angles so as to be seen from the front.

Referring to Fig. 11, an opening where at least one of a terminal busbar and a module connector is exposed may be formed in the second end plate 420 according to the present embodiment. The opening may be a terminal busbar opening or a module connector opening. As an example, as shown in Fig. 11, a module connector opening 420H where the module connector 600 is exposed may be formed in the second end plate 420. This means that the module connector 600 is mounted on the above-mentioned second busbar frame. However, Fig. 11 is an exemplary structure, and according to another embodiment of the present disclosure, a terminal busbar may be mounted onto the second busbar frame, whereby a terminal busbar opening may be formed in the second end plate 420.

Meanwhile, although not specifically shown in the figure, the module connector 600 can be connected to a temperature sensor, a voltage measuring member, or the like provided inside the battery module 100a. Such a module connector 600 is connected to an external BMS (battery management system) to form an LV (Low voltage) connection, and it performs a function of transmitting temperature information, voltage level and the like measured by the temperature sensor or the voltage measuring member to the external BMS.

Referring to Figs. 1 to 3, in the case of the conventional battery module 10, high-temperature heat, gas, flame, etc. ejected through the openings 41H and 42H of the battery module 10 may affect the adjacent battery module 10. In particular, the adjacent battery module 10 with terminal busbars facing each other for HV connection may cause damage to the terminal bus bar or other electrical components including the battery cell 11.

Unlike the conventional case, the battery module 100a according to the present embodiment includes the first venting-preventing part 310P formed on the first busbar frame 310, and thus can restrict the high-temperature heat, gas and flame, etc. generated from the battery cell 110 from being discharged through the opening of the first end plate 410, for example, the terminal busbar opening 410H. Thereby, damage to adjacent battery modules and HV connection structures can be greatly reduced.

As the gas discharge is suppressed by the first venting-preventing part 310P, heat, gas and flame, etc. inside the battery module 100a may be discharged in the -x-axis direction through an opening formed in the second end plate 420, for example, through the module connector opening 420H (see Fig. 11). That is, as an exemplary form, flame diffusion and the like can be minimized by guiding a venting gas and a flame in the direction of the LV connection structure instead of the direction of the HV connection structure. In this case, in order to set the venting gas discharge path as above, the terminal busbar opening 410H and the module connector opening 420H may be formed in mutually opposite directions with respect to the battery module 100a.

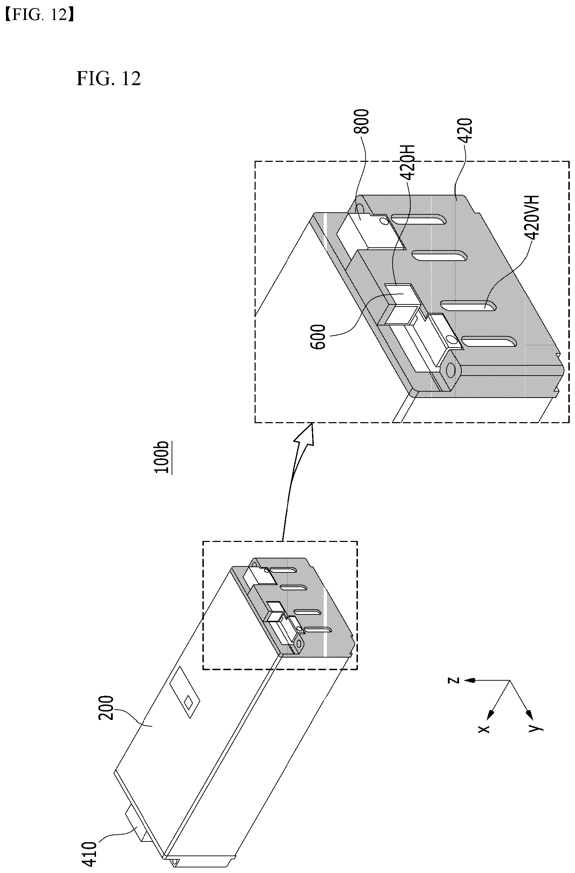

Fig. 12 is a perspective view showing a battery module according to a modified embodiment of the present disclosure. In particular, the appearance of the second end plate facing forward is shown similarly to that in Fig. 11.

Referring to Fig. 12, the battery module 100b according to a modified embodiment of the present disclosure may include a module frame 200, a first end plate 410 and a second end plate 420. The battery module 100b according to the present embodiment may include a first busbar frame including a first venting-preventing part, similarly to the battery module 100a described above. A detailed description will be omitted because it overlaps with those described above.

At this time, a venting hole 420VH may be formed in the second end plate 420 according to the present embodiment. Further, an insulating cover 800 may be located between the second busbar frame and the second end plate 420, and in such an insulating cover 800, a venting hole may be similarly formed in a portion corresponding to the venting hole 420VH of the second end plate 420.

In the present embodiment, the venting hole 420VH is formed in the second end plate 420 together with the configuration of the first venting-preventing part described above, whereby the gas whose discharge is restricted by the first venting-preventing part can be guided to be discharged through the venting hole 420VH. That is, as an example, as shown in Fig. 12, heat, gas, and flame inside the battery module 100b can be discharged in the -x-axis direction not only through the module connector opening 420H but also through the venting hole 420VH formed in the second end plate 420. Fig. 12 shows that the four venting holes 420VH are formed long along the z-axis direction, but the number or shape thereof is not particularly limited.

On the other hand, referring to Figs. 8 and 9, the first venting-preventing part 310P may have a kind of arrow shape or a block shape that occupies a certain space. The arrow shape means a configuration in which a plate-shaped member is extended and two curved members are extended from one end of the plate-shaped member, similarly to the first venting-preventing part 310P located at the extreme end of the y-axis direction in Fig. 9. The block shape means a bulky and protruding configuration so as to occupy a certain space between the electrode leads 111, similarly to the first venting-preventing part 310P located on the first venting-preventing part 310P in the form of an arrow in Fig. 9. These first venting-preventing parts 310P are exemplary structures, and if they are formed in a shape corresponding to their shape between the electrode leads 111 of the battery cells 110 and the gas path can be restricted, the shape thereof is not particularly limited.

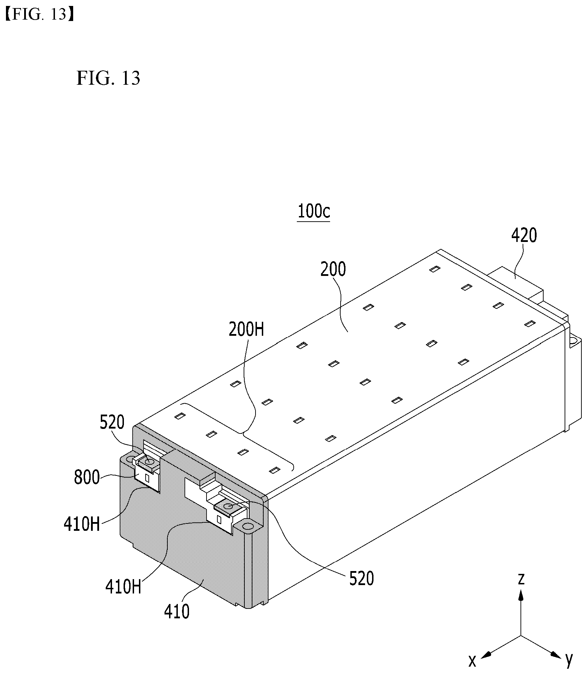

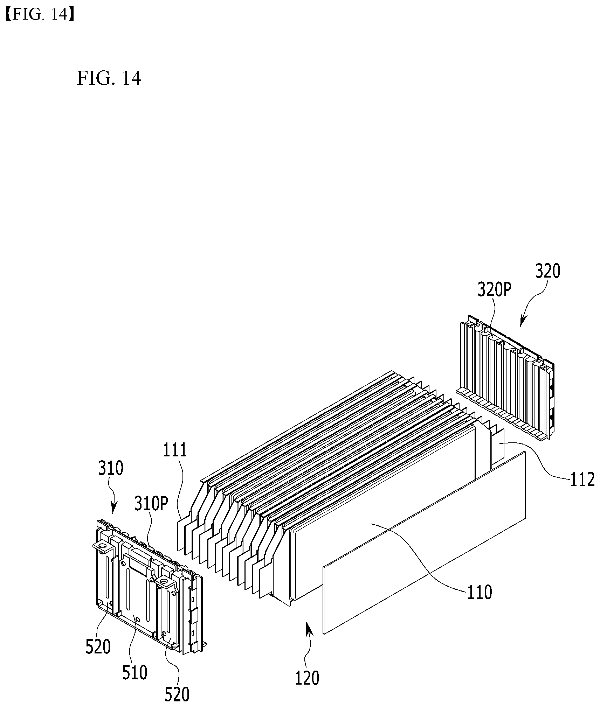

Next, a battery module 100c according to a modified embodiment of the present disclosure will be described in detail with reference to Figs. 13 and 14.

Fig. 13 is a perspective view showing a battery module according to a modified embodiment of the present disclosure. Fig. 14 is a perspective view showing a first busbar frame, a second busbar frame, and a battery cell stack included in the battery module of Fig. 13.

The battery module 100c according to a modified embodiment of the present disclosure may include a battery cell stack 120 in which a plurality of battery cells 110 are stacked, a first end plate 410, a second end plate 420 and module frame 200. The first end plate 410 may be joined to the module frame 200 while covering the first busbar frame 310, and the second end plate 420 may be jointed to the module frame 200 while covering the second busbar frame 320.

The battery module 100c according to this embodiment may include a first busbar frame 310 arranged on one surface of the battery cell stack 120 in one direction (x-axis direction) in which the electrode lead 111 protrudes, and a second busbar frame 320 arranged on the other surface of the battery cell stack 120 in the other direction (-x-axis direction) in which the electrode lead 112 protrudes. That is, the first busbar frame 310 may be located between the first end plate 410 and the battery cell stack 120, and a second busbar frame 320 may be located between the second end plate 420 and the battery cell stack 120. At least one of a busbar, a terminal busbar, and a module connector may be mounted onto the first busbar frame 310, and at least one of a busbar, a terminal busbar, and a module connector may also be mounted onto the second bus bar frame 320. As an example, the busbar 510 and the terminal busbar 520 may be mounted onto the first busbar frame 310. Although not specifically shown in the figure, a busbar and a module connector 600 (see Fig. 11 or 12) may be mounted onto the second busbar frame 320. The electrode lead 111 protruding in the x-axis direction is bent after passing through the slit formed in the first busbar frame 310 and can be joined to the busbar 510 or the terminal busbar 520, and the electrode lead 112 protruding in the -x-axis direction is bent after passing through a slit formed in the second busbar frame 320 and can be joined to the busbar.

At this time, the first busbar frame 310 may include a first venting-preventing part 310P protruding toward between the electrode leads 111 of adjacent battery cells 110 among the battery cells 110. The second busbar frame 320 may include a second venting-preventing part 320P protruding toward between the electrode leads 112 of the adjacent battery cells 110 among the battery cells 110. That is, the first venting-preventing part 310P may be formed on the surface of the first busbar frame 310 that faces the battery cell stack 120, and a second venting-preventing part 320P may be formed on a surface of the second busbar frame 320 that faces the battery cell stack 120. Specific structures of the first venting-preventing part 310P and the second venting-preventing part 320P may be similar to or identical to those described above with reference to Figs. 7 to 10. A detailed description will be omitted since it overlaps with those described above.

Each of the first end plate 410 and the second end plate 420 may be formed with an opening wherein at least one of the terminal busbar and the module connector is exposed. The opening may be a terminal busbar opening or a module connector opening. As an example, a terminal busbar opening 410H where the terminal busbar 520 is exposed may be formed in the first end plate 410, and a module connector opening 420H (see Fig. 11 or Fig. 12) where the module connector is exposed may be formed in the second end plate 420. The battery module 100c according to the present embodiment is provided with a first busbar frame 310 in which a first venting-preventing part 310P is formed and a second busbar frame 320 in which a second venting-preventing part 320P is formed, whereby it is possible to suppress the high temperature heat, gas, flame, etc. discharged through the terminal busbar opening 410H or the module connector opening 420H. That is, it is possible to minimize the discharge of venting gas and flames in both the direction of the HV connection structure and the direction of the LV connection structure.

At this time, a gas discharge port 200H may be formed on the upper surface of the module frame 200 according to the present embodiment. In particular, a plurality of gas discharge ports 200H may be arranged at regular intervals and distributed over the entire upper surface of the module frame 200. The venting gas or flame generated inside the battery module 100c is not discharged toward the first end plate 410 or the second end plate 420 by the first venting-preventing part 310P and the second venting-preventing part 320P, and instead, it may be discharged in the upper direction (z-axis direction) of the battery module 100c through the gas discharge port 200H. As described above, the battery module 100c according to the present embodiment includes the module frame 200 in which the first venting-preventing part 310P, the second venting-preventing part 320P and the gas discharge port 200H are formed, whereby the influence of venting gas or flame on adjacent battery modules can be minimized, and flame diffusion can be effectively suppressed.

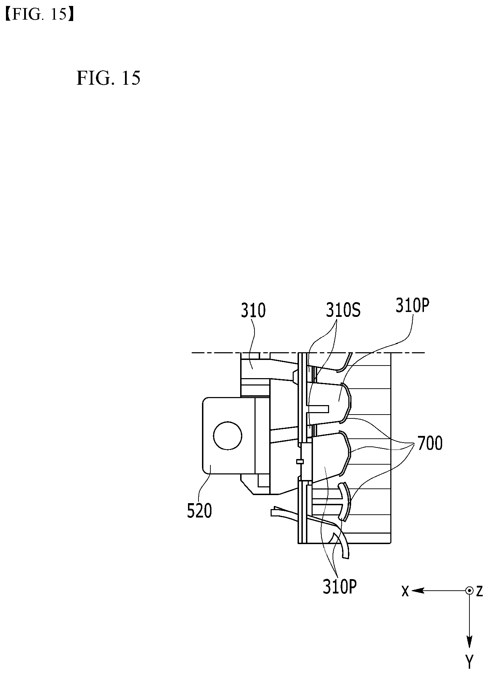

Fig. 15 is a partial plan view showing a first busbar frame to which a cushioning member is attached according to a modified embodiment of the present disclosure. In particular, Fig. 15 shows the first busbar frame 310 at the same angle as Figs. 9 and 10.

Referring to Fig. 15, the first busbar frame 310 may include a cushioning member 700 attached to a surface facing the battery cell 110 among the first venting-preventing part 310P. By attaching the cushioning member 700, it is possible to absorb the tolerances of individual members and the assembling tolerance, and to absorb physical damage that may occur when a portion of the first busbar frame 310 directly contacts the battery cell 110. The cushioning member 700 may include at least one of PU (polyurethane) foam and silicone foam.

On the other hand, according to another embodiment of the present disclosure, in consideration of the tolerance of individual members or the prevention of physical damage, the first venting-presenting part 310P may be arranged so as to have a predetermined distance from the battery cell 110.

The terms representing directions such as the front side, the rear side, the left side, the right side, the upper side, and the lower side have been used in embodiments of the present disclosure, but the terms used are provided simply for convenience of description and may become different according to the position of an object, the position of an observer, or the like.

The one or more battery modules according to embodiments of the present disclosure described above can be mounted together with various control and protection systems such as a battery management system (BMS) and a cooling system to form a battery pack.

The battery module or the battery pack can be applied to various devices. For example, it can be applied to vehicle means such as an electric bike, an electric vehicle, and a hybrid electric vehicle, and may be applied to various devices capable of using a secondary battery, without being limited thereto.

The present disclosure has been described in detail with reference to exemplary embodiments thereof, but the scope of the present disclosure is not limited thereto and modifications and improvements made by those skilled in the part by using the basic concept of the present disclosure, which are defined in the following claims, also belong to the scope of the present disclosure.

### [Description of Reference Numerals]

100a, 100b, 100c: battery module
120: battery cell stack
200: module frame
310: first busbar frame
310P: first venting-preventing part

## Claims

1. A battery module comprising:
a battery cell stack (120) in which a plurality of battery cells (110) including electrode leads (111, 112) protruded in mutually opposite directions are stacked;
a module frame (200) that houses the battery cell stack (120); and
a first busbar frame (310) arranged on one surface of the battery cell stack (120) in one direction in which the electrode leads (111, 112) protrude,
wherein the first busbar frame (310) comprises a first venting-preventing part (310P) protruding toward between the electrode leads (111, 112) of adjacent battery cells (110), the first venting-preventing part (310P) being configured to suppress a gas discharge.

2. The battery module according to claim 1, wherein:
the first venting-preventing part (310P) fills a space between the electrode leads (111, 112) of adjacent battery cells (110).

3. The battery module according to claim 1, wherein:
the first busbar frame (310) comprises a cushioning member (700) attached to a surface of the first venting-preventing part (310P) facing the battery cell (110).

4. The battery module according to claim 1, wherein:
at least one of a busbar, a terminal busbar, and a module connector is mounted onto the first busbar frame (310).

5. The battery module according to claim 4, wherein:
the battery module further comprises a first end plate (410) that is joined to the module frame (200) while covering the first busbar frame (310), and
the first end plate (410) is formed with an opening where at least one of the terminal busbar and the module connector is exposed.

6. The battery module according to claim 1, wherein:
the battery module further comprises a second busbar frame (320) arranged on the other surface of the battery cell stack (120) in the other direction in which the electrode leads (111, 112) protrude.

7. The battery module according to claim 6, wherein:
at least one of a busbar, a terminal busbar, and a module connector is mounted onto the second busbar frame (320).

8. The battery module according to claim 7, wherein:
the battery module further comprises a second end plate (420) that is joined to the module frame (200) while covering the second busbar frame (320), and
the second end plate (320) is formed with an opening where at least one of the terminal busbar and the module connector is exposed.

9. The battery module according to claim 7, wherein:
the battery module further comprises a second end plate (420) that is joined to the module frame (200) while covering the second busbar frame (420), and
a venting hole (420VH) for gas discharge is formed in the second end plate (320).

10. The battery module according to claim 6, wherein:
the second busbar frame (320) comprises a second venting-preventing part (320P) that is protruded toward between the electrode leads (111, 112) of adjacent battery cells (110) among the battery cells (110).

11. The battery module according to claim 10, wherein:
at least one of a busbar, a terminal busbar, and a module connector is mounted onto the second busbar frame (320).

12. The battery module according to claim 11, wherein:
the battery module further comprises a second end plate (420) that is joined to the module frame (200) while covering the second busbar frame (320), and
the second end plate (420) is formed with an opening where at least one of the terminal busbar and the module connector is exposed.

13. The battery module according to claim 1, wherein:
a gas discharge port (200H) is formed on the upper surface of the module frame (200).

14. A battery pack comprising the battery module according to claim 1.

## Patentansprüche

1. Batteriemodul aufweisend:
einen Batteriezellenstapel (120), in dem mehrere Batteriezellen (110) aufweisend Elektrodenleitungen (111, 112), welche in zueinander entgegengesetzte Richtungen herausragen, gestapelt sind;
einen Modulrahmen (200), der den Batteriezellenstapel (120) aufnimmt; und
einen ersten Sammelschienenrahmen (310), der auf einer Oberfläche des Batteriezellenstapels (120) in einer Richtung angeordnet ist, in welcher die Elektrodenleitungen (111, 112) herausragen,
wobei der erste Sammelschienenrahmen (310) ein erstes Entlüftungsverhinderungsteil (310P) aufweist, das in Richtung zwischen den Elektrodenleitungen (111, 112) benachbarter Batteriezellen (110) herausragt, wobei das erste Entlüftungsverhinderungsteil (310P) konfiguriert ist, um eine Gasentladung zu verhindern.

2. Batteriemodul nach Anspruch 1, wobei:
das erste Entlüftungsverhinderungsteil (310P) einen Raum zwischen den Elektrodenleitungen (111, 112) benachbarter Batteriezellen (110) füllt.

3. Batteriemodul nach Anspruch 1, wobei:
der erste Sammelschienenrahmen (310) ein Dämpfungselement (700) aufweist, das an einer Oberfläche des ersten Entlüftungsverhinderungsteils (310P) angebracht ist, die der Batteriezelle (110) zugewandt ist.

4. Batteriemodul nach Anspruch 1, wobei:
mindestens eine von einer Sammelschiene, einer Anschlusssammelschiene und einem Modulverbinder auf dem ersten Sammelschienenrahmen (310) montiert ist.

5. Batteriemodul nach Anspruch 4, wobei:
das Batteriemodul ferner eine erste Endplatte (410) aufweist, die mit dem Modulrahmen (200) verbunden ist, während sie den ersten Sammelschienenrahmen (310) abdeckt, und
die erste Endplatte (410) mit einer Öffnung ausgebildet ist, wo die Anschlusssammelschiene und/oder der Modulverbinder freiliegt.

6. Batteriemodul nach Anspruch 1, wobei:
das Batteriemodul ferner einen zweiten Sammelschienenrahmen (320) aufweist, der auf der anderen Oberfläche des Batteriezellenstapels (120) in der anderen Richtung angeordnet ist, in welcher die Elektrodenleitungen (111, 112) herausragen.

7. Batteriemodul nach Anspruch 6, wobei:
mindestens eine von einer Sammelschiene, einer Anschlusssammelschiene und einem Modulverbinder auf dem zweiten Sammelschienenrahmen (320) montiert ist.

8. Batteriemodul nach Anspruch 7, wobei:
das Batteriemodul ferner eine zweite Endplatte (420) aufweist, die mit dem Modulrahmen (200) verbunden ist, während sie den zweiten Sammelschienenrahmen (320) abdeckt, und
die zweite Endplatte (320) mit einer Öffnung ausgebildet ist, wo die Anschlusssammelschiene und/oder der Modulverbinder freiliegt.

9. Batteriemodul nach Anspruch 7, wobei:
das Batteriemodul ferner eine zweite Endplatte (420) aufweist, die mit dem Modulrahmen (200) verbunden ist, während sie den zweiten Sammelschienenrahmen (420) abdeckt, und
ein Entlüftungsloch (420VH) für Gasentladung in der zweiten Endplatte (320) ausgebildet ist.

10. Batteriemodul nach Anspruch 6, wobei:
der zweite Sammelschienenrahmen (320) ein zweites Entlüftungsverhinderungsteil (320P) aufweist, das in Richtung zwischen den Elektrodenleitungen (111, 112) benachbarter Batteriezellen (110) unter den Batteriezellen (110) herausragt.

11. Batteriemodul nach Anspruch 10, wobei:
mindestens eine von einer Sammelschiene, einer Anschlusssammelschiene und einem Modulverbinder auf dem zweiten Sammelschienenrahmen (320) montiert ist.

12. Batteriemodul nach Anspruch 11, wobei:
das Batteriemodul ferner eine zweite Endplatte (420) aufweist, die mit dem Modulrahmen (200) verbunden ist, während sie den zweiten Sammelschienenrahmen (320) abdeckt, und
die zweite Endplatte (420) mit einer Öffnung ausgebildet ist, wo die Anschlusssammelschiene und/oder der Modulverbinder freiliegt.

13. Batteriemodul nach Anspruch 1, wobei:
eine Gasentladungsöffnung (200H) auf der oberen Oberfläche des Modulrahmens (200) ausgebildet ist.

14. Batteriepack aufweisend das Batteriemodul nach Anspruch 1.

## Revendications

1. Module de batterie comprenant :
un empilement d'éléments de batterie (120) dans lequel une pluralité d'éléments de batterie (110) comprenant des conducteurs d'électrode (111, 112) saillants dans des directions mutuellement opposées sont empilés ;
un châssis de module (200) contenant l'empilement d'éléments de batterie (120) ; et
un premier cadre de barre omnibus (310) disposé sur une surface de l'empilement d'éléments de batterie (120) dans une direction dans laquelle les conducteurs d'électrode (111, 112) font saillie,
le premier cadre de barre omnibus (310) comprenant un premier composant de prévention de la ventilation (310P) faisant saillie en direction de l'espace séparant les conducteurs d'électrode (111, 112) d'éléments de batterie adjacentes (110), le premier composant de prévention de la ventilation (310P) étant configuré pour empêcher une décharge de gaz.

2. Module de batterie selon la revendication 1,
le premier composant de prévention de la ventilation (310P) remplissant un espace entre les conducteurs d'électrode (111, 112) d'éléments de batterie adjacentes (110).

3. Module de batterie selon la revendication 1,
le premier cadre de barres omnibus (310) comprenant un élément amortisseur (700) fixé sur une surface du premier composant de prévention de la ventilation (310P) faisant face à l'élément de batterie (110).

4. Module de batterie selon la revendication 1,
au moins un d'une barre omnibus, d'une barre omnibus terminale, et d'un connecteur de module étant monté sur le premier cadre de barre omnibus (310).

5. Module de batterie selon la revendication 4,
le module de batterie comprenant en outre une première flasque (410) jointe au cadre du module (200) tout en couvrant le premier cadre de barre omnibus (310), et
la première flasque (410) étant réalisée avec une ouverture où au moins un de la barre omnibus terminale et du connecteur du module est exposé.

6. Module de batterie selon la revendication 1,
le module de batterie comprenant en outre un deuxième cadre de barre omnibus (320) agencé sur l'autre surface de l'empilement d'éléments de batterie (120) dans l'autre direction dans laquelle les conducteurs d'électrode (111, 112) font saillie.

7. Module de batterie selon la revendication 6,
au moins un d'une barre omnibus, d'une barre omnibus terminale, et d'un connecteur de module étant monté sur le deuxième cadre de barre omnibus (320).

8. Module de batterie selon la revendication 7,
le module de batterie comprenant en outre une deuxième flasque (420) jointe au cadre du module (200) tout en couvrant le deuxième cadre de barre omnibus (320), et
la deuxième flasque (320) étant réalisée avec une ouverture où au moins un de la barre omnibus terminale et du connecteur du module est exposé.

9. Module de batterie selon la revendication 7,
le module de batterie comprenant en outre une deuxième flasque (420) jointe au cadre du module (200) tout en couvrant le deuxième cadre de barre omnibus (420), et
un orifice d'aération (420VH) pour l'évacuation des gaz étant formé dans la deuxième flasque (320).

10. Module de batterie selon la revendication 6,
le deuxième cadre de barre omnibus (320) comprenant un deuxième composant de prévention de la ventilation (320P) saillante en direction de l'espace entre les conducteurs d'électrode (111, 112) d'éléments de batterie adjacentes (110) parmi les éléments de batterie (110).

11. Module de batterie selon la revendication 10,
au moins un d'une barre omnibus, d'une barre omnibus terminale, et d'un connecteur de module étant monté sur le deuxième cadre de barre omnibus (320).

12. Module de batterie selon la revendication 11,
le module de batterie comprenant en outre une deuxième flasque (420) jointe au cadre du module (200) tout en couvrant le deuxième cadre de barre omnibus (320), et
la deuxième flasque (420) étant réalisée avec une ouverture où au moins un de la barre omnibus terminale et du connecteur du module est exposé.

13. Module de batterie selon la revendication 1,
un orifice de décharge de gaz (200H) étant réalisé sur la surface supérieure du cadre du module (200).

14. Bloc-batterie comprenant le module de batterie selon la revendication 1.
